# EUROPÄISCHE PATENTSCHRIFT

(11) **EP 3 363 610 B1**
(45) Veröffentlichungstag und Bekanntmachung des Hinweises auf die Patenterteilung: **19.06.2019**
(21) Anmeldenummer: 18158875.7
(22) Anmeldetag: 08.04.2011
(51) Int. Cl.: B29B 13/02, B29C 49/64, H05B 3/00, B29C 49/06, B29C 35/08

(54) **HEIZMODUL MIT OBERFLÄCHENKÜHLUNG FÜR VORFORMLINGE**
HEATING MODULE WITH SURFACE COOLING FOR PRE-FORMS
MODULE DE CHAUFFAGE DOTÉ D'UN REFROIDISSEMENT DE SURFACE POUR PRÉFORMES

(30) Priorität: 23.04.2010 DE 102010018214
(43) Veröffentlichungstag der Anmeldung: 22.08.2018
(62) Teilanmeldung aus: 11161618.1
(73) Patentinhaber: Krones Aktiengesellschaft, 93073 Neutraubling (DE)
(72) Erfinder: SCHÖNBERGER, Wolfgang, 93073 Neutraubling (DE); HOLZER, Christian, 93073 Neutraubling (DE); VOTH, Klaus, 93073 Neutraubling (DE)
(74) Vertreter: Benninger, Johannes

(56) Entgegenhaltungen:
- DE-A1- 3 510 241
- DE-A1- 10 145 456
- DE-A1-102007 031 210
- DE-U1- 20 311 657
- US-B1- 6 632 087
- US-B2- 7 550 105

## Beschreibung

Die vorliegende Erfindung betrifft ein Heizmodul für Vorformlinge, ein Verfahren zum Kühlen von Vorformlingen und / oder Strahlern in einem Heizmodul für Vorformlinge und eine Oberflächenkühlung gemäß den Merkmalen der Oberbegriffe der Ansprüche 1 und 9.

Bei der Herstellung von Kunststoffflaschen werden so genannte Vorformlinge aus thermoelastischem Material, beispielsweise PET, verwendet. Die Vorformlinge sind üblicherweise Spritzgussteile, die in einer Heizeinrichtung auf Umformtemperatur und anschließend in einer Blasvorrichtung in eine endgültige Form gebracht werden.

Beim derzeitigen Standard-Prozess werden Vorformlinge im Heizmodul von einer Spindel gehalten, die drehbar in einem Kettenglied gelagert ist. Im Heizmodul werden mehrere Kettenglieder mit den darin gelagerten Spindeln verbunden und bilden eine endlos umlaufende Kette. An der außen liegenden Seite der geraden Längsseiten des Ofens befinden sich Heizeinrichtungen, die dem Vorformling mittels IR-Strahlung Wärme zuführen. An der Innenseite und am Boden sind Reflektoren angebracht, um die ausgestrahlte IR-Strahlung möglichst gut auszunutzen. Durch Schlitze in den der Heizeinrichtungen gegenüberliegenden Reflektoren wird über Lufteinblasung eine Oberflächenkühlung zur Vermeidung von Verbrennungen der Vorformlingsoberfläche erreicht.

Ebenso müssen die Halterungen der IR- Strahler vor übermäßiger Erwärmung geschützt werden, dies wird meist mit einem separaten Luftstrom realisiert.

Der Mündungsbereich der Vorformlinge wird durch einen weiteren Luftstrom ebenfalls vor zu großer Erwärmung geschützt. Dies ist notwendig, da bei zu großer Erwärmung des Mündungsbereiches dieser im nachfolgenden Blasform- Verfahren deformiert werden könnte. Die dabei entstehenden Behälter könnten nicht verwendet werden. Um den Mündungsbereich der Vorformlinge zu schützen, kommt beispielsweise ein auf der Höhe des Mündungsbereiches der Vorformlinge angeordnetes Kühlschild zur Anwendung, das verhindert, dass die gesamte Strahlerwärme auf den Mündungsbereich trifft. Herkömmlicherweise weist ein solches Kühlschild absorbierende Eigenschaften auf.

Durch ständig steigende Energiepreise wird ein möglichst hoher Wirkungsgrad von Maschinen und Anlagen immer wichtiger. Es ist bekannt, dass sich eine konsequente Verengung des Heiztunnels positiv auf die Energieeffizienz des Vorformling-Aufheizprozesses auswirkt.

Der Nachteil dabei ist jedoch, dass die Lampenkolbentemperaturen dabei sehr hoch ansteigen. Diese können dann bis zu ihren Grenztemperaturen und / oder darüber liegen. Die Folge daraus sind vorzeitige Lampenausfälle bzw. verringerte Lampenlebensdauern.

Aus diesem Grund ist zusätzlich zur Kühlung der Vorformlinge auch eine gezielte Strahlerkühlung notwendig.

EP 1 413 420 A1 beschreibt ein Verfahren und eine Vorrichtung zum Erwärmen von Vorformlingen, wobei die Oberfläche der Vorformlinge gekühlt wird. Die Kühlluft strömt aus Schlitzen heraus, die in der Längsrichtung der Vorformlinge angeordnet sind. An den Schlitzen sind zusätzliche Leitbleche fest angebracht, so dass die Kühlluft gezielt auf die Oberfläche der Vorformlinge strömen kann.

DE 23 52 926 A1 zeigt eine Vorrichtung, bei der die Oberfläche der Vorformlinge während der Erwärmung zusätzlich gekühlt werden muss, wobei der Austritt des Kühlmediums aus einem Spalt oder aus mehreren Löchern erfolgen kann.

DE 35 10 24 1A1, die die Merkmale der Oberbegriffe der Ansprüche 1 und 9 offenbart, zeigt eine Vorrichtung zum Erhitzen von Rohlingen aus thermoplastischen Material zum Zwecke der Bildung von Rohlingen. Die Heizvorrichtung umfasst einen Tunnel, wobei an der Seitenwand Intrarotstrahler parallel zur Längsachse des Tunnels fixiert sind. Eine obere Wand des Tunnels umfasst eine Öffnung, welche mittels eines Rohrs mit der Ansaugöffnung eines Ventilators verbunden ist. Der Ventilator erzeugt im Rohr einen Unterdruck, der Frischluft mitreißt und zwar einerseits in die Kammer durch die Kammeröffnungen und andererseits in den Tunnel durch den Längsschlitz. Die in die Kammern eingedrungene Luft dient zum Kühlen der Rückseite der Wand sowie der elektrischen Verbindungen des Infrarotstrahlers. Die Luft gelangt dann durch die Öffnungen in den Tunnel, um die Hälse der Rohrlinge zu umströmen und zu kühlen.

US 6 632 087 B1 beschreibt einen Infrarotofen zum Erhitzen von Vorformlingen. Zur Erhitzung der Vorformlinge umfasst der Infrarotofen zahlreiche Infrarot-Heizlampen. Mittels eines Gebläses kann ein Luftstrom erzeugt werden, welcher Luftstrom zum Kühlen der Vorformlinge, des Kopfes des Vorformlings und der Infrarot-Heizlampen dient. Ein Teil des Luftstroms passiert zunächst ein reflektierendes Gitter, umströmt dann den Vorformling und passiert dann die Infrarot-Heizlampen sowie die den Infrarot-Heizlampen nachgeordnete reflektierende Fläche.

DE 203 11 657 U1 und DE 101 45 456 A1 beschreiben eine Vorrichtung zum Erwärmen von Vorformlingen aus thermoplastischem Kunststoff. Zur Erwärmung der Vorformlinge umfasst die Vorrichtung Heizkästen mit Infrarotstrahlern. Parallel zu den Heizkästen beabstandet sind Reflektoren. Oberhalb der Heizkästen ist ein Kühlschild vorgesehen. Um eine Überhitzung der Oberfläche des Vorformlings zu vermeiden, sind zwischen den Heizkästen schmale Schlitzdüsen mit angeschlossenen Gebläsen vorgesehen, die Raumluft konzentriert auf die Oberfläche der vorbeirotierenden Vorformlingen blasen. An der Außenseite jedes Heizkastens ist zudem ein Kühlgebläse angeschlossen, welches zur Kühlung der Infrarotstrahler dient.

Das Ziel dieser Erfindung besteht darin, eine verbesserte energieeffiziente Oberflächen- und / oder Strahlerkühlung zu realisieren und dadurch eine Optimierung der Heizenergie auch auf Dauer zu erreichen.

Die obige Aufgabe wird durch ein Heizmodul und ein Verfahren gelöst, die die Merkmale der Patentansprüche 1 und 9 umfassen. Weitere vorteilhafte Ausgestaltungen werden durch die Unteransprüche beschrieben.

Die Erfindung betrifft ein Heizmodul zur Erwärmung von Vorformlingen zur weiteren Verarbeitung in einer Streckblasvorrichtung. Das Heizmodul umfasst eine Heizgasse mit Transportmitteln, die für die Bewegung der Vorformlinge entlang einer Transportstrecke notwendig sind. Vorzugsweise werden die Vorformlinge beim Transport um ihre Längsachse rotiert.

Auf mindestens einer Seite der Heizgasse befinden sich IR- Strahler. Durch den rotierenden Transport der Vorformlinge durch die Heizgasse hindurch wird gewährleistet, dass die Vorformlinge in ihrem gesamten Umfang gleichmäßig aufgrund der Strahlungswärme erwärmt werden.

Das Heizmodul weist mindestens ein Mittel zur Erzeugung eines Mündungs-Kühlmittelstroms zur Kühlung des Mündungsbereiches der Vorformlinge, mindestens ein Mittel zur Erzeugung eines Oberflächen- Kühlmittelstroms zur Kühlung der Oberfläche der Vorformlinge und mindestens ein Mittel zur Erzeugung eines Strahler- Kühlmittelstroms zur Kühlung der IR- Strahler auf.

Das Heizmodul umfasst mindestens eine mechanisch einstellbare Verstelleinrichtung zur Steuerung der Menge und / oder Stromrichtung des Oberflächen-Kühlmittelstroms.

Weiterhin ist ein optimiertes Kühlschild für die Strahlerkühlung vorgesehen. Das Kühlschild ist vorzugsweise oberhalb der Strahler auf Höhe des Mündungsbereiches der Vorformlinge angeordnet. Die Unterseite des Kühlschilds ist den Strahlern zugewandt. Die Unterseite weist besonders gute Wärmestrahlung reflektierende Eigenschaften auf. Beispielsweise handelt es sich um eine Hochglanz polierte Leichtmetall- Oberfläche o.ä., eine Oberfläche, auf die eine hochreflektierenden Schicht aufgebracht wurde, oder andere dem Fachmann bekannte Oberflächen mit hochreflektierenden Eigenschaften. Aufgrund der hochreflektierenden Oberfläche wird die Strahlung vom Kühlschild besser reflektiert und weniger absorbiert und das Kühlschild somit weniger erwärmt. Stattdessen wird die Wärme in die Heizgasse reflektiert und dient somit ebenfalls der Erwärmung der Vorformlinge.

Weiterhin kann über eine besondere Formgebung der Unterseite des Kühlschildes eine bessere Ausnutzung der IR-Strahlung erreicht werden. Insbesondere kann die Unterseite des Kühlschilds so ausgebildet werden, dass die auftreffende Strahlung in Richtung der Vorformlinge reflektiert wird. Geeignet sind hierfür beispielsweise eine konkave Rundung, eine Schräge o.ä. Beispielsweise kann auch eine Kombination aus Rundung und Schräge verwendet werden, um eine gewünschte Richtung der Reflektion der Wärmestrahlung zu erreichen.

Mit einem solchen Kühlschild für die Strahlerkühlung kann die Energieeffizienz des Heizmoduls weiterhin verbessert werden. Das Kühlschild kann allein oder in Kombination mit den nachfolgend beschriebenen einstellbaren Verstelleinrichtungen verwendet werden.

Vorzugsweise ist die mechanisch einstellbare Verstelleinrichtung in Abhängigkeit vom Luftvolumenstrom regelbar und/ oder steuerbar.

Gemäß einer bevorzugten Ausführungsform dient die mechanisch einstellbare Verstelleinrichtung der Abtrennung eines Strahler- Kühlmittelstroms vom Oberflächen-Kühlmittelstrom. Das bedeutet, dass für den Oberflächen- Kühlmittelstrom und für den Strahler- Kühlmittelstrom nur ein Kühlmittelstromerzeuger anstelle der herkömmlicherweise verwendeten zwei Kühlmittelstromerzeuger notwendig ist. Dies reduziert die Kosten für die Herstellung und / oder Wartung der Maschine. Weiterhin kann dadurch eine kompaktere Bauweise und eine Energieersparnis erreicht werden.

Die Abtrennung des Strahler- Kühlmittelstroms erfolgt beispielsweise mit mindestens einer, vorzugsweise wenigstens zwei, Luftleitklappen. Diese sind in der Zuleitung für den Oberflächen- Kühlmittelstrom angeordnet. Die Luftleitklappen können beliebig eingestellt werden, so dass der Oberflächen- Kühlmittelstrom und der Strahler-Kühlmittelstrom mengenmäßig reguliert werden können. Insbesondere erfolgt die Regulierung der mindestens einen Luftleitklappe in Abhängigkeit des Luftvolumenstroms der Oberflächenkühlung.

Der Oberflächen- Kühlmittelstrom wird über eine erste Zuleitung und Öffnungsschlitze im Gegenreflektor gezielt auf die Oberfläche der Vorformlinge geleitet, um diese zu kühlen, während der Strahler- Kühlmittelstrom über eine zweite Zuleitung an den Strahlern, vorzugsweise an deren Strahlerenden, vorbeigeführt wird, um diese zu kühlen.

Gemäß einer alternativen bevorzugten Ausführungsform umfasst das Heizmodul eine Oberflächenkühlung, bei der die mechanisch einstellbare Verstelleinrichtung Kühlschlitze für den Oberflächen- Kühlmittelstrom umfasst. Die Kühlschlitze sind vorzugsweise im Gegenreflektor auf der der Seite mit den IR-Strahlern gegenüberliegenden Seite der Heizgasse angeordnet. Insbesondere sind die Kühlschlitze so angeordnet, dass jeweils ein IR-Strahler einem Kühlschlitz gegenüberliegt.

Die Kühlschlitze sind mechanisch einstellbar. Insbesondere sind die Öffnungen der Kühlschlitze verstellbar. Beispielsweise kann der Durchschnitt der Öffnungen und / oder deren Länge eingestellt werden. Weiterhin kann vorgesehen sein, dass die Kühlschlitze in der Höhe verstellbar und somit ihr Abstand zueinander einstellbar ist.

Gemäß einer Ausführungsform ist jeder Kühlschlitz individuell einstellbar. Gemäß einer alternativen Ausführungsform wird eine Mehrzahl von Kühlschlitzen zu einem so genannten Kühlbereich zusammengefasst, der gemeinsam einstellbar und regulierbar ist.

Die Erfindung betrifft weiterhin ein Verfahren zur Kühlung von Vorformlingen und / oder IR- Strahlern in einem Heizmodul und eine Oberflächenkühlung. Die Menge und / oder Stromrichtung des Oberflächen- Kühlmittelstroms wird durch mindestens eine mechanisch einstellbare Verstelleinrichtung reguliert. Die Verstellvorrichtung und ihre Merkmale sind bereits oben ausführlich beschrieben worden, so dass auf eine Wiederholung verzichtet werden kann. Ein weiterer wichtiger Punkt des Verfahrens betrifft die Verwendung eines Kühlschilds, vermittels dessen die nach oben gerichtete Wärmestrahlung der IR- Strahler in die Heizgasse reflektiert werden kann.

Die beschriebenen Gegenstände sind grundsätzlich zur Anwendung in Mikrowellenöfen, Rundläuferöfen, Linearöfen, stationären Öfen etc. geeignet. Weiterhin ist die Verwendung von individuellen Heiztaschen denkbar, wobei jeder Vorformling in einer separaten Heiztasche selektiv temperiert wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine schematische Ansicht eines Heizmoduls zur Erwärmung von Vorformlingen (Stand der Technik).
- Figur 2: zeigt eine Heizgasse und einen Heizkasten (Stand der Technik).
- Figur 3: zeigt eine Heizgasse und einen Heizkasten mit einer ersten Ausführungsform einer Oberflächen- und Strahlerkühlung.
- Figur 4: zeigt ebenfalls eine Heizgasse und einen Heizkasten einer ersten Ausführungsform gemäß Figur 3, wobei die Kühlmittelströme dargestellt sind.
- Figur 5: zeigt verschiedene Einstellungen der Luftleitklappen zur Regulierung des Volumenstromes.
- Figur 6: zeigt eine Heizgasse und einen Heizkasten mit einer zweiten Ausführungsform einer Oberflächenkühlung.
- Figur 7: zeigt Details der zweiten Ausführungsform einer Oberflächenkühlung.
- Figur 8: zeigt eine Heizgasse mit einem Heizkasten und einer Strahlerkühlung mit optimiertem Kühlschild.
- Figur 9: zeigt ein optimiertes Kühlschild.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

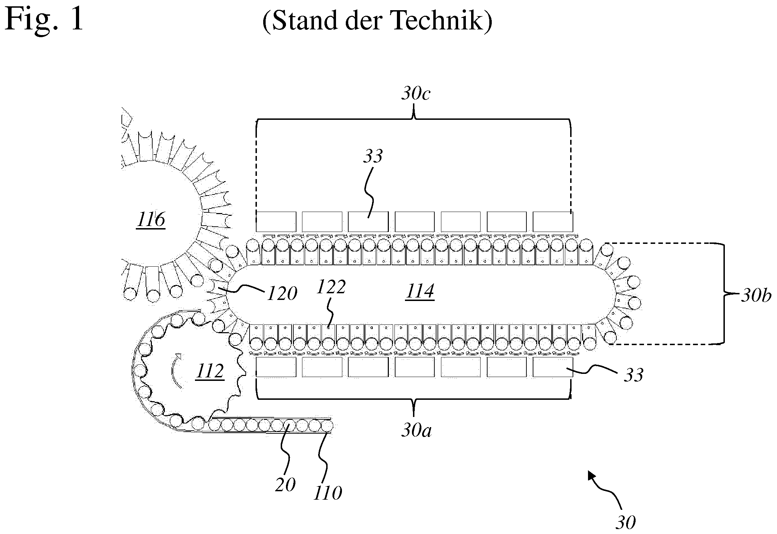

Figur 1 zeigt eine schematische Ansicht eines Heizmoduls 30 zur Erwärmung von Vorformlingen 20. Die Vorformlinge 20 werden über ein Transportmittel 110 angeliefert, mittels eines Sägezahnsterns 112 auf Teilung gebracht und in den Ofen bzw. das Heizmodul 30 eingegeben.

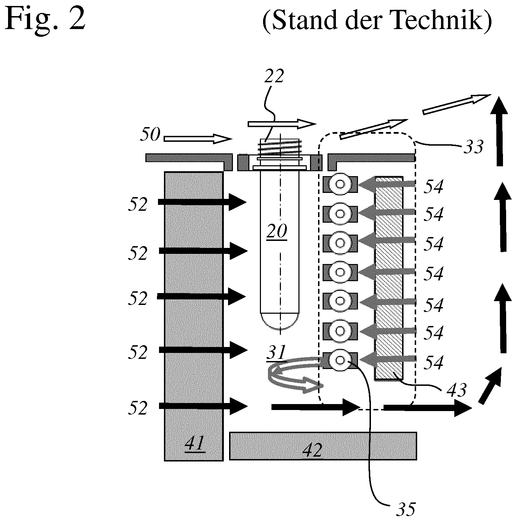

Insbesondere werden die Vorformlinge 20 an eine Transportvorrichtung 114 übergeben, die die Vorformlinge 20 durch den Ofen 30 transportiert. Beispielsweise werden die Vorformlinge 20 durch Greifer oder Halter 120 an einer umlaufenden endlosen Transportkette 122 aufgenommen. Die Vorformlinge 20 durchlaufen zunächst eine lineare Heizstrecke 30a, in der sie beim Durchlaufen von so genannten Heizkästen 33, in denen IR- Strahler angeordnet sind (vgl. Figur 2), gleichmäßig rundum erwärmt werden. Nach einem Umlenkbereich 30b am Ende des Ofens 30 werden sie in einer zweiten geraden Heizstrecke 30c zurückgeführt und auf endgültige Temperatur gebracht. In den Heizkästen 33 sind weiterhin Reflektoren (vgl. Figur 2) angebracht, um Strahlungsverluste so gering wie möglich zu halten. Somit wird die von den Heizstrahlern abgegebene Strahlung, die nicht in die Vorformlinge 20 eingeht, von den Reflektoren zurückgeworfen und geht nicht komplett verloren.

Während die Vorformlinge 20 den Ofen 30 durchlaufen, werden sie vorzugsweise gedreht, um eine gleichmäßige Erwärmung rundherum zu gewährleisten.

Anschließend werden die erwärmten Vorformlinge 20 beispielsweise an einen Auslaufstern 116 übergeben und einem Streckblasmodul zugeführt.

Figur 2 zeigt eine Heizgasse 31 und einen Heizkasten 33 nach dem bekannten Stand der Technik. Im Heizkasten 33 sind IR-Strahler 35 zum Erwärmen des Vorformlings 20 angeordnet. Am Boden und auf der dem Heizkasten 33 gegenüberliegenden Seite der Heizgasse 31 befinden sich Bodenreflektoren 42 und Gegenreflektoren 41 zur optimalen Ausnutzung der Strahlungsenergie. Hinter den IR- Strahlern 35 ist ein Rückenreflektor 43 angeordnet.

Um zu verhindern, dass der Vorformling 20 und die Strahler 35 überhitzen, sind drei Kühlmittelströme vorgesehen. Der Mündungs- Kühlmittelstrom 50 verhindert ein zu starkes Erwärmen der Mündung 22 der Vorformlinge 20, der Oberflächen- Kühlmittelstrom 52 dient der Kühlung der Vorformlings- Oberfläche und der Strahler- Kühlmittelstrom 54 dient insbesondere der Kühlung der Strahlerenden. Herkömmlicherweise werden die drei Kühlmittelströme 50, 52, 54 jeweils durch ein eigenes Gebläse (nicht dargestellt) produziert und können somit getrennt voneinander geregelt bzw. eingestellt werden. Die Verwendung von drei Gebläsen ist jedoch in Bezug auf Kosten und Platzbedarf für die Anordnung nachteilig.

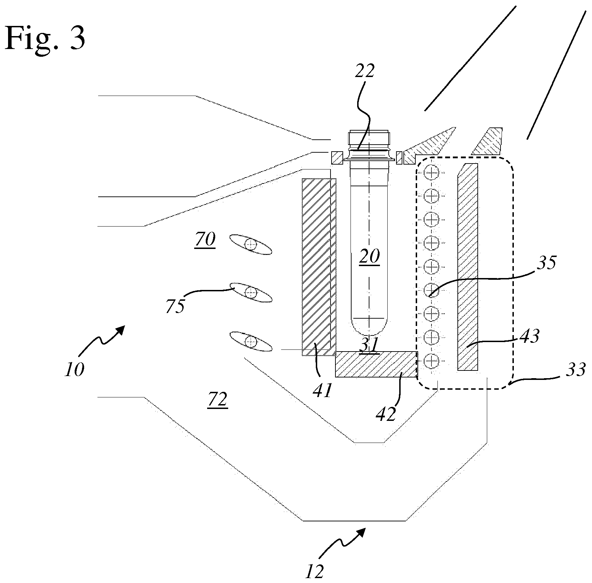

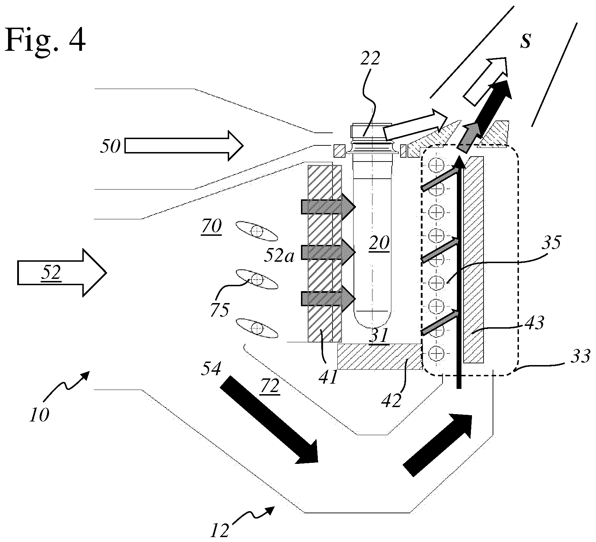

Figur 3 und Figur 4 zeigen eine Heizgasse 31 und einen Heizkasten 33 einer ersten Ausführungsform einer Vorformlingsoberflächenkühlung 10 und einer Strahlerkühlung 12. Insbesondere sind in Figur 4 die drei im Zusammenhang mit Figur 2 beschriebenen Kühlmittelströme 50, 52 und 54 eingezeichnet.

Der im Stand der Technik vorhandene, sehr hohe Luftvolumenstrom 52 der Oberflächenkühlung 10 kann genutzt werden, um damit auch den Luftstrom 54 der Strahlerkühlung 12 zu versorgen. Gemäß der hier dargestellten Ausführungsform versorgt ein Gebläse gemeinsam die Zuleitungen 70 für die Oberflächenkühlung 10 und die Zuleitungen 72 für die Strahlerkühlung 12.

Der zweite Kühlmittelstrom 54 kann zur Kühlung der Vorformlinge 20 mit einer mechanisch einstellbaren Verstelleinrichtung gesteuert werden. Die Regulierung bzw. Steuerung des Oberflächen- Kühlmittelstroms 52 erfolgt im gezeigten Ausführungsbeispiel mit Hilfe von so genannten Luftleitklappen 75. Diese sind beispielsweise in der Zuleitung 70 für die Oberflächenkühlung 10 angeordnet.

Die Luftleitklappen 75 können eingestellt werden und somit können die beiden Luftströme 52, 54 mengenmäßig reguliert werden. Insbesondere erfolgt die Regulierung der Luftleit- bzw. Jalousieklappe 75 in Abhängigkeit des Luftvolumenstroms 52 der Oberflächenkühlung 10.

Durch die Mitbenutzung des bereits vorhandenen Gebläses für den Oberflächen-Kühlmittelstrom 52 kann somit das separate Gebläse für den Strahler- Kühlmittelstrom 54 eingespart werden. Dies wirkt sich nicht nur kostenreduzierend, sondern vor allem sehr platzsparend auf die Konstruktion der kompletten Luftführung aus.

Der Oberflächen- Kühlmittelstrom 52 wird über die Zuleitung 70 gezielt auf die Oberfläche der Vorformlinge 20 geleitet, um diese zu kühlen, während der Strahler-Kühlmittelstrom 54 über die Zuleitung 72 an den Strahlern 35, vorzugsweise an deren Strahlerenden, vorbeigeführt wird, um diese zu kühlen.

Ein weiter Vorteil ist gegeben, wenn der Luftstrom 54 der heutigen StrahlerKühlung 12 nicht mehr von der Rückseite her auf die Halterungen der Lampen 35 bläst, sondern von der Unterseite des Heizmoduls 30 nach oben hin anströmt.

Damit sind diese beiden Luftströmungen 52, 54 der Oberflächen- Kühlung 10 und der Strahler- Kühlung 12 nicht mehr gegenläufig und behindern sich damit nicht mehr, sondern können ihre Dynamik der Flussrichtung voll ausschöpfen.

Weiterhin vereinigen sich die drei Kühlmittelströme 50, 52 und 54 und können gemeinsam abgeleitet werden. Weist der Mündungs- Kühlmittelstrom 50 eine höhere Geschwindigkeit als die anderen beiden Kühlmittelströme 52, 54 auf, so bewirkt dies zusätzlich einen Sog S, der sich ebenfalls vorteilhaft auf die Luftführung auswirkt.

Auch könnte der Strahler- Kühlmittelstrom 54 weiterhin in einen Teilstrom zur Kühlung Lampenkolben und einen Teilstrom zur Kühlung der Lampenenden aufgeteilt werden.

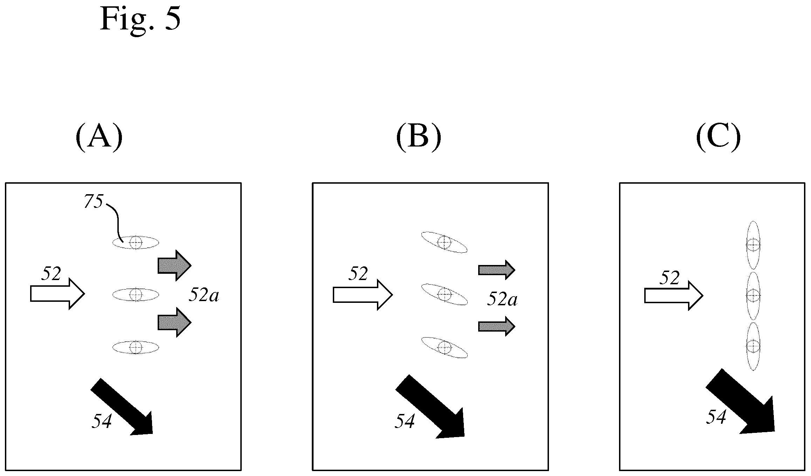

Figur 5 zeigt verschiedene Einstellung der Luftleitklappen 75 zur Regulierung des Volumenstromes. Die Luftleit- bzw. Jalousieklappen 75 teilen den Volumenstrom 52 der zugeführten Gesamtluft in zwei Teile 52a, 54 auf. Der erste Teil dient als Kühlmittelstrom 52a zur Oberflächenkühlung der Vorformlinge (nicht dargestellt), der zweite Teil dient als Kühlmittelstrom 54 zur Kühlung der Strahler (nicht dargestellt).

Vorzugsweise wird der Volumenstrom des zugeführten Gesamtluftstroms 52 frequenzgeregelt, somit können in Abhängigkeit der Einstellung der Luftklappen 75 und des zugeführten Luftvolumenstroms beide Kühlmittelströme 52, 54 variabel eingestellt und / oder geregelt werden.

In Figur 5A sind die Luftleitklappen 75 jeweils komplett geöffnet, so dass der Großteil des gesamten Kühlmittelstroms 52 als Oberflächen- Kühlmittelstrom 52a verwendet wird. Nur ein geringer Anteil wird automatisch über die Zuleitung (nicht dargestellt) als Strahler- Kühlmittelstrom 54 abgezweigt.

In Figur 5B sind die Luftleitklappen 75 in ihrem Winkel verstellt, so dass ein Teil des gesamten Kühlmittelstroms 52 als Strahler- Kühlmittelstrom 54 abgezweigt wird.

Figur 5C stellt eine Situation dar, in der die Luftleitklappen 75 die Zuleitung komplett oder zumindest größtenteils verschließen, so dass keine bzw. wenig des gesamten Kühlmittelstroms 52 als Oberflächen- Kühlmittelstrom 52a verwendet wird. Stattdessen wird alles bzw. ein Großteil der Gesamtluft 52 als Strahler- Kühlmittelstrom 54 abgezweigt.

Vorzugsweise verschließen die geschlossenen Luftleitklappen 75 (vgl. Figur 5C) nicht die gesamte Zuleitung für den Oberflächen- Kühlmittelstrom 52a. Dies ergibt sich auch aus einem Vergleich mit den Figuren 3 und 4.

Gemäß einer bevorzugten Ausführungsform erfolgt die Verstellung der Luftleitklappen 75 gemeinsam gesteuert und / oder geregelt. Gemäß einer weiteren Ausführungsform kann jede Luftleitklappe 75 individuell eingestellt werden.

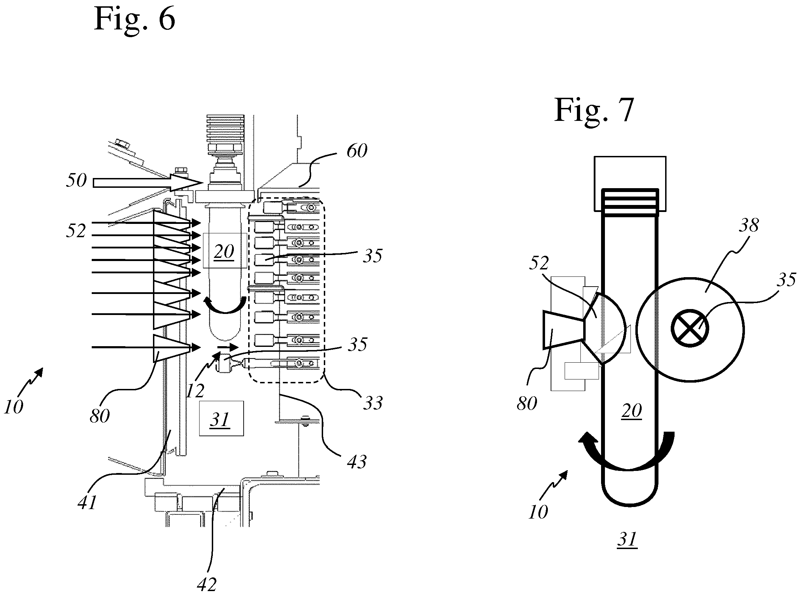

Figur 6 zeigt eine Heizgasse 31 mit einem Heizkasten 33 und einer zweiten Ausführungsform einer Oberflächenkühlung 10, die auch als zusätzliche Kühlung 12 für die Strahler 35 dienen kann.

Bei dieser Ausführungsform erfolgt die Oberflächenkühlung 10 durch Kühlmittelströme 52 in Längsrichtung gegenüber den Strahlern 35. Die Kühlmittelströme 52 strömen durch so genannte Kühlschlitze 80, deren Öffnungsquerschnitte und / oder Länge vorzugsweise einstellbar sind. Zudem sind die Kühlschlitze 80 in ihrer Höhe zueinander verstellbar.

Aufgrund der Verstellbarkeit kann ein geregelter Luftstrom 52 eingestellt werden, der die Oberfläche der Vorformlinge 20 kühlt. Es können Öffnungen einzelner Kühlschlitze 80 jeweils individuell geregelt werden oder aber es werden mehrere Kühlschlitze 80 zu so genannten Kühlbereichen zusammengefasst und diese werden gemeinsam geregelt und / oder gesteuert.

Figur 7 zeigt Details der zweiten Ausführungsform der Oberflächenkühlung 10. Zur Vereinfachung sind nur jeweils ein Kühlschlitz 80 und ein Strahler 35 dargestellt.

Dadurch, dass die einstellbaren und / oder regelbaren Kühlschlitze 80 genau gegenüber den Strahlern 35 angeordnet sind und dass die Vorformlinge 20 rotierend durch die Heizgasse 31 befördert werden, werden die Vorformlinge 20 in genau dem Bereich, der durch die Strahlungswärme 38 am meisten erwärmt wird, durch den Oberflächen- Kühlmittelstrom 52 aus den Kühlschlitzen 80 wiederum gekühlt.

Figur 7 zeigt weiterhin, dass zusätzlich zu den Reflektoren 41 (Gegenreflektor), 42 (Bodenreflektor) und 43 (Rückenreflektor) noch ein (aus dem Stand der Technik bekanntes und beispielsweise in den Figuren 3, 4 dargestelltes) sogenanntes Kühlschild 60 in der Heizgasse 31 angebracht ist, um einen ungewünschten Wärmeeintrag in die Vorformlingsmündung 22 zu vermeiden. Dies ist wichtig, da die Vorformlingsmündung 22 bereits das fertig ausgeformte Gewinde aufweist, das sich nicht mehr verändern darf, da ansonsten die spätere Funktion nicht mehr gewährleistet werden würde. Das Kühlschild 60 ist auch für bestimmte Temperaturprofile notwendig, da gelegentlich eine gezielte "Abrisskante" des Temperaturprofils gewünscht wird. Das heißt, die Wärme soll nur bis zu dieser Kante in den Vorformling 20 eingebracht werden.

Der oberste Heizstrahler 35 kann vorzugsweise direkt unter dem Kühlschild 60 platziert werden (nicht dargestellt), so dass Strahlung mit hoher Intensität darauf auftrifft. Das Kühlschild 60 absorbiert einen Großteil der darauf auftreffenden Strahlung. Über den Mündungs- Kühlmittelstrom 50 wird das Kühlschild 60 mit gekühlt und die aufgenommene Wärme an die Umgebung abgeführt. Die vom Kühlschild 60 absorbierte Strahlung geht somit verloren und wirkt sich dementsprechend negativ auf die Energieeffizienz der gesamten Maschine aus.

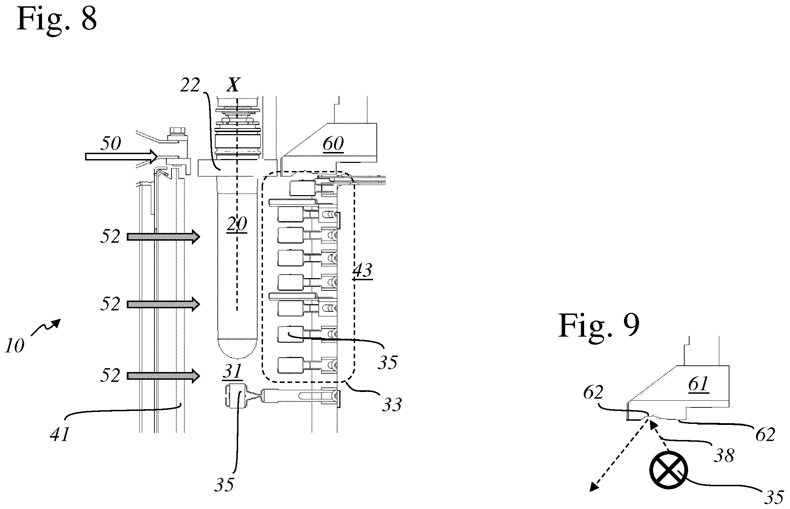

Figur 8 zeigt eine Heizgasse 31 mit einem Heizkasten 33 und einer Strahlerkühlung durch ein optimiertes Kühlschild 61 und Figur 9 zeigt das Kühlschild 61 allein.

Das optimierte Kühlschild 61 ist so angepasst, dass es einen Großteil der darauf treffenden Strahlung in Richtung Heizgasse 33 (vgl. Figur 8) zurückreflektiert und / oder gar nicht erst absorbiert und / oder an die Umgebung abgibt. Dieses Ziel wird durch eine hochreflektierende Gestaltung der Unterseite 62 und eine gezielte Anpassung der Form der Unterseite 62 des optimierten Kühlschildes 61 erreicht. Eine Verbesserung des Reflexionsverhaltens der Unterseite 62 könnte beispielsweise durch Hochglanzpolieren, Auftragen einer hochreflektierenden Schicht oder Gestalten des Kühlschildes 61 aus einem geeigneten Material, wie beispielsweise Keramik, erreicht werden. Dadurch wird die Strahlung vom Kühlschild 61 besser reflektiert und weniger absorbiert und das Kühlschild 61 somit weniger erwärmt. Die Wärme geht nicht in das Kühlschild 61 ein, sondern wird wieder in die Heizgasse 31 (vgl. Figur 8) reflektiert und steht somit zur Erwärmung der Vorformlinge 20 (vgl. Figur 8) zur Verfügung.

Weiterhin kann über die Formgebung der Unterseite 62 des Kühlschildes 61 eine bessere Ausnutzung der IR-Strahlung realisiert werden. Die Unterseite 62 des Kühlschilds 61 wird dergestalt ausgebildet, dass die auftreffende Strahlung 38 in Richtung der Vorformlinge 20 (vgl. Figur 8) reflektiert wird. Dies wird beispielsweise über eine Schräge, konkave Rundform oder ähnliche Gestaltung der Unterseite 62 erreicht.

In Figur 9 ist eine Art Kombination aus Rundung und Schräge dargestellt, um eine höhere Einstellung des obersten Strahlers 35 zu ermöglichen. Dies ist gelegentlich notwendig um die bereits beschriebene "Abrisskante" des Temperaturprofils zu erreichen.

Über diese beiden erwähnten Modifikationen wird eine bessere und gezieltere Reflexion der vorhandenen IR-Strahlung realisiert, was sich positiv auf den Gesamtwirkungsgrad der Anlage auswirkt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Oberflächenkühlung
- 12: Strahlerkühlung
- 20: Vorformling
- 22: Mündungsbereich
- 30: Heizmodul / Ofen
- 30a: erste lineare Heizstrecke
- 30b: Umlenkbereich
- 30c: zweite lineare Heizstrecke
- 31: Heizgasse
- 33: Heizkasten
- 35: IR- Strahler
- 38: Strahlungswärme
- 41: Gegenreflektor
- 42: Bodenreflektor
- 43: Rückenreflektor
- 50: Mündungs- Kühlmittelstrom
- 52: Oberflächen- Kühlmittelstrom
- 52a: Teil- Oberflächen- Kühlmittelstrom
- 54: Strahler- Kühlmittelstrom
- 60: Kühlschild (Stand der Technik)
- 61: optimiertes Kühlschild
- 62: Unterseite
- 70: Zuleitung der Oberflächenkühlung
- 72: Zuleitung der Strahlerkühlung
- 75: Luftleitklappe / Jalousieklappe
- 80: Kühlschlitz / Öffnung
- 110: Transportmittel
- 112: Sägezahnstern
- 114: Umlaufende Transportvorrichtung
- 116: Auslaufstern
- 120: Greifer
- 122: Transportkette
- S: Sog

## Patentansprüche

1. Heizmodul (30) zur Erwärmung von Vorformlingen zur Verarbeitung in einer Streckblasvorrichtung, wobei das Heizmodul (30) eine Heizgasse (31) mit Transportmitteln (34) für die Bewegung der Vorformlinge entlang einer Transportstrecke aufweist und wobei sich an mindestens einer Seite der Heizgasse (31) IR- Strahler (35) befinden, wobei das Heizmodul (30) mindestens ein Mittel zur Erzeugung eines Mündungs- Kühlmittelstroms (50) zur Kühlung des Mündungsbereiches (22) der Vorformlinge (20), mindestens ein Mittel zur Erzeugung eines Oberflächen- Kühlmittelstroms (52) zur Kühlung der Oberfläche der Vorformlinge (20) und mindestens ein Mittel zur Erzeugung eines Strahler-Kühlmittelstroms (54) zur Kühlung der IR- Strahler (35) aufweist, wobei das Heizmodul (30) mindestens eine mechanisch einstellbare Verstelleinrichtung Steuerung der Menge und / oder Stromrichtung des Oberflächen- Kühlmittelstroms (52) aufweist, **dadurch gekennzeichnet, dass** das Heizmodul (30) ein Kühlschild (61) für die Strahlerkühlung umfasst, das oberhalb der IR- Strahler (35) auf Höhe des Mündungsbereiches (22) der Vorformlinge (20) angeordnet ist, wobei das Kühlschild (61) eine Unterseite (62) aufweist, die den IR- Strahlern (35) zugewandt ist und besonders gute Wärmestrahlung reflektierende Eigenschaften aufweist, wobei es sich bei der Unterseite (62) um eine Oberfläche mit hochreflektierenden Eigenschaften, eine hochglanzpolierte Leichtmetall-Oberfläche oder um eine Oberfläche, auf die eine hochreflektierende Schicht aufgebracht ist, handelt.

2. Heizmodul (30) nach Anspruch 1, wobei die mechanisch einstellbare Verstelleinrichtung regel- und / oder steuerbar ist.

3. Heizmodul (30) nach Anspruch 1 oder 2, wobei mit der mechanisch einstellbaren Verstelleinrichtung der Strahler- Kühlmittelstrom (54) vom Oberflächen-Kühlmittelstrom (52) abteilbar ist.

4. Heizmodul (30) nach einem der voranstehenden Ansprüche, wobei die mechanisch einstellbare Verstelleinrichtung mindestens eine Luftleitklappe (75) umfasst.

5. Heizmodul (30) nach einem der Ansprüche 1 bis 2, wobei die mechanisch einstellbare Verstelleinrichtung Kühlschlitze (80) für den Oberflächen-Kühlmittelstrom (52) umfasst, die auf der der Seite mit den IR-Strahlern (35) gegenüberliegenden Seite der Heizgasse (31) dergestalt angeordnet sind, dass jeweils ein IR-Strahler (35) einem Kühlschlitz (80) gegenüberliegt.

6. Heizmodul (30) nach Anspruch 5, wobei jeder Kühlschlitz (80) individuell einstellbar und / oder verschließbar und / oder in der Höhe einstellbar ist.

7. Heizmodul (30) nach einem der voranstehenden Ansprüche, wobei das Kühlschild (61) an der Unterseite (62) eine reflektierende Oberfläche aufweist und / oder wobei die Unterseite (62) so geformt ist, dass die Wärmestrahlung (38) der Strahler (35) in die Heizgasse (31) reflektiert wird.

8. Heizmodul (30) nach Anspruch 7, wobei die Form der Unterseite (62) des Kühlschilds (61) eine konkave Wölbung und / oder eine Schräge aufweist.

9. Verfahren zur Kühlung der Oberfläche von Vorformlingen (20) und / oder von IR-Strahlern (35) in einem Heizmodul (30) zur Erwärmung von Vorformlingen zur Verarbeitung in einer Streckblasvorrichtung, wobei das Heizmodul (30) eine Heizgasse (31) mit Transportmitteln für die Bewegung der Vorformlinge (20) entlang einer Transportstrecke aufweist und wobei sich an mindestens einer Seite der Heizgasse (31) IR- Strahler (35) befinden, wobei das Heizmodul (30) mindestens ein Mittel zur Erzeugung eines Mündungs- Kühlmittelstroms (50) zur Kühlung des Mündungsbereiches (22) der Vorformlinge (20), mindestens ein Mittel zur Erzeugung eines Oberflächen- Kühlmittelstroms (52) zur Kühlung der Oberfläche der Vorformlinge (20) und mindestens ein Mittel zur Erzeugung eines Strahler- Kühlmittelstroms (54) zur Kühlung der IR- Strahler (35) aufweist, wobei die Menge und / oder Stromrichtung des Oberflächen- Kühlmittelstroms (52) mit mindestens einer mechanisch einstellbaren Verstelleinrichtung (75, 80) reguliert und / oder gesteuert wird, **dadurch gekennzeichnet, dass** das Heizmodul (30) ein Kühlschild (61) für die Strahlerkühlung umfasst, wobei die nach oben gerichtete Wärmestrahlung (38) der IR- Strahler (35) an dem hochreflektierenden Kühlschild (61) in die Heizgasse (31) reflektiert wird, wobei es sich bei der Unterseite (62) um eine Oberfläche mit hochreflektierenden Eigenschaften, eine hochglanzpolierte Leichtmetall-Oberfläche oder um eine Oberfläche, auf die eine hochreflektierende Schicht aufgebracht ist, handelt.

10. Verfahren nach Anspruch 9, wobei der Oberflächen- Kühlmittelstrom (52) in einen Teil- Oberflächen- Kühlmittelstrom (52a) und einen Strahler- Kühlmittelstrom (54) geteilt wird.

11. Verfahren nach Anspruch 10, wobei die Teilung des Oberflächen- Kühlmittelstroms (52) mit mindestens einer Luftleitklappe (75) erfolgt.

12. Verfahren nach Anspruch 9, wobei die Zufuhr des Oberflächen- Kühlmittelstroms (52) durch Luftschlitze (80) erfolgt, die auf der der Seite mit den IR-Strahlern (35) gegenüberliegenden Seite der Heizgasse (31) dergestalt angeordnet sind, dass jeweils ein IR-Strahler (35) einem Luftschlitz (80) gegenüberliegt.

13. Verfahren nach Anspruch 12, wobei der Querschnitt und / oder die Länge der Luftschlitze (80) und / der Abstand der Luftschlitze (80) zueinander verstellt werden kann.

14. Verfahren nach einem der Ansprüche 12 und 13, wobei jeder der Luftschlitz (80) individuell eingestellt und / oder verschlossen werden kann.

## Claims

1. A heating module (30) for heating preforms to be processed in a stretch blow moulding apparatus, wherein the heating module (30) has a heating lane (31) with transport means for the movement of the preforms along a transport path, and wherein infrared emitters (35) are located on at least one side of the heating lane (31), wherein the heating module (30) has at least one medium for generating a mouth section coolant stream (50) for cooling the mouth section (22) of the preforms (20), at least one medium for generating a surface coolant stream (52) for cooling the surface of the preforms (20), and at least one medium for generating an emitter coolant stream (54) for cooling the infrared emitters (35), wherein the heating module (30) has at least one mechanically adjustable adjustment device for the control of the quantity and/or stream direction of the surface coolant stream (52), **characterised in that** the heating module (30) comprises a cooling shield (61) for the cooling of the emitters, which cooling shield (61) is disposed above the infrared emitters (35) at the level of the mouth section (22) of the preforms (20), wherein the cooling shield (61) has an underside (62) facing toward the infrared emitters (35) and having particularly good characteristics of thermal radiation reflection, wherein the underside (62) is a surface with highly reflective characteristics, a mirror-polished light metal surface, or a surface with a highly reflective coating applied thereonto.

2. The heating module (30) according to claim 1, wherein the mechanically adjustable adjustment device is regulatable and/or controllable.

3. The heating module (30) according to claim 1 or 2, wherein the emitter coolant stream (54) is separable from the surface coolant stream (52) by means of the mechanically adjustable adjustment device.

4. The heating module (30) according to one of the previous claims, wherein the mechanically adjustable adjustment device comprises at least one air guide flap (75).

5. The heating module (30) according to one of the claims 1 to 2, wherein the mechanically adjustable adjustment device comprises cooling vents (80) for the surface coolant stream (52), the cooling vents (80) being disposed on the side of the heating lane (31) located opposite the side with the infrared emitters (35) in such a manner that an infrared emitter (35) is in each case located opposite a cooling vent (80).

6. The heating module (30) according to claim 5, wherein each cooling vent (80) is individually adjustable and/or closable and/or height-adjustable.

7. The heating module (30) according to one of the previous claims, wherein the cooling shield (61) has a reflective surface on the underside (62) and/or wherein the underside (62) is formed such that the thermal radiation (38) of the emitters (35) is reflected into the heating lane (31).

8. The heating module (30) according to claim 7, wherein the form of the underside (62) of the cooling shield (61) has a concave curvature and/or a slope.

9. A method for cooling the surface of preforms (20) and/or of infrared emitters (35) in a heating module (30) for heating preforms to be processed in a stretch blow moulding apparatus, wherein the heating module (30) has a heating lane (31) with transport means for the movement of the preforms (20) along a transport path, and wherein infrared emitters (35) are located on at least one side of the heating lane (31), wherein the heating module (30) has at least one medium for generating a mouth section coolant stream (50) for cooling the mouth section (22) of the preforms (20), at least one medium for generating a surface coolant stream (52) for cooling the surface of the preforms (20), and at least one medium for generating an emitter coolant stream (54) for cooling the infrared emitters (35), wherein the quantity and/or stream direction of the surface coolant stream (52) is regulated and/or controlled with at least one mechanically adjustable adjustment device (75, 80), **characterised in that** the heating module (30) comprises a cooling shield (61) for the cooling of the emitters, wherein the upwardly directed thermal radiation (38) of the infrared emitters (35) is reflected into the heating lane (31) at the highly reflective cooling shield (61), wherein the underside (62) is a surface with highly reflective characteristics, a mirror-polished light metal surface, or a surface with a highly reflective coating applied thereonto.

10. The method according to claim 9, wherein the surface coolant stream (52) is divided into a partial surface coolant stream (52a) and an emitter coolant stream (54).

11. The method according to claim 10, wherein the division of the surface coolant stream (52) is carried out with at least one air guide flap (75).

12. The method according to claim 9, wherein the supply of the surface coolant stream (52) is carried out by way of air vents (80) disposed on the side of the heating lane (31) located opposite the side with the infrared emitters (35) in such a manner that an infrared emitter (35) is in each case located opposite an air vent (80).

13. The method according to claim 12, wherein the cross section and/or the length of the air vents (80) and/or the spacing of the air vents (80) can be adjusted relative to each other.

14. The method according to one of the claims 12 and 13, wherein each of the air vents (80) can be individually adjusted and/or closed.

## Revendications

1. Module de chauffage (30) destiné à chauffer des préformes pour le traitement dans un dispositif d'étirage-soufflage, dans lequel le module de chauffage (30) présente une ruelle de chauffage (31) comprenant des moyens de transport pour le déplacement des préformes le long d'un trajet de transport, et dans lequel des radiateurs aux rayons infrarouges (35) sont situés sur au moins un côté de la ruelle de chauffage (31), dans lequel ledit module de chauffage (30) présente au moins un moyen de génération d'un courant de fluide de refroidissement de bouche (50) destiné à refroidir la zone de bouche (22) des préformes (20), au moins un moyen de génération d'un courant de fluide de refroidissement de surface (52) destiné à refroidir la surface des préformes (20) et au moins un moyen de génération d'un courant de fluide de refroidissement de radiateur (54) destiné à refroidir les radiateurs aux rayons infrarouges (35), dans lequel le module de chauffage (30) présente au moins un dispositif de réglage qui est ajustable mécaniquement et destiné à commander la quantité et / ou le sens de courant du courant de fluide de refroidissement de surface (52), **caractérisé par le fait que** le module de chauffage (30) comprend un bouclier de refroidissement (61) pour le refroidissement des radiateurs qui est disposé au-dessus des radiateurs aux rayons infrarouges (35) au niveau de la zone de bouche (22) des préformes (20), dans lequel ledit bouclier de refroidissement (61) présente une face inférieure (62) qui montre vers les radiateurs aux rayons infrarouges (35) et présente des propriétés de réflexion du rayonnement thermique particulièrement bonnes, ladite face inférieure (62) étant une surface à propriétés hautement réfléchissantes, une surface en métal léger polie miroir ou une surface sur laquelle est appliquée une couche hautement réfléchissante.

2. Module de chauffage (30) selon la revendication 1, dans lequel le dispositif de réglage ajustable mécaniquement est réglable et / ou commandable.

3. Module de chauffage (30) selon la revendication 1 ou 2, dans lequel le courant de fluide de refroidissement de radiateur (54) peut être séparé du courant de fluide de refroidissement de surface (52) par l'intermédiaire du dispositif de réglage ajustable mécaniquement.

4. Module de chauffage (30) selon l'une quelconque des revendications précédentes, dans lequel le dispositif de réglage ajustable mécaniquement comprend au moins un volet de guidage d'air (75).

5. Module de chauffage (30) selon l'une quelconque des revendications 1 à 2, dans lequel le dispositif de réglage ajustable mécaniquement comprend des fentes de refroidissement (80) pour le courant de fluide de refroidissement de surface (52), qui sont disposées du côté de la ruelle de chauffage (31) opposé au côté comprenant les radiateurs aux rayons infrarouges (35), de telle manière que respectivement un radiateur aux rayons infrarouges (35) est situé en regard d'une fente de refroidissement (80).

6. Module de chauffage (30) selon la revendication 5, dans lequel chaque fente de refroidissement (80) peut être réglée et / ou fermée et / ou réglée en hauteur de façon individuelle.

7. Module de chauffage (30) selon l'une quelconque des revendications précédentes, dans lequel le bouclier de refroidissement (61) présente une surface réfléchissante sur la face inférieure (62), et / ou dans lequel la face inférieure (62) est formée de telle sorte que le rayonnement thermique (38) des radiateurs (35) est réfléchi dans la ruelle de chauffage (31).

8. Module de chauffage (30) selon la revendication 7, dans lequel la forme de la face inférieure (62) du bouclier de refroidissement (61) est bombée de manière concave et / ou oblique.

9. Procédé de refroidissement de la surface de préformes (20) et / ou de radiateurs aux rayons infrarouges (35) dans un module de chauffage (30) destiné à chauffer des préformes pour le traitement dans un dispositif d'étirage-soufflage, dans lequel le module de chauffage (30) présente une ruelle de chauffage (31) comprenant des moyens de transport pour le déplacement des préformes (20) le long d'un trajet de transport, et dans lequel des radiateurs aux rayons infrarouges (35) sont situés sur au moins un côté de la ruelle de chauffage (31), dans lequel ledit module de chauffage (30) présente au moins un moyen de génération d'un courant de fluide de refroidissement de bouche (50) destiné à refroidir la zone de bouche (22) des préformes (20), au moins un moyen de génération d'un courant de fluide de refroidissement de surface (52) destiné à refroidir la surface des préformes (20) et au moins un moyen de génération d'un courant de fluide de refroidissement de radiateur (54) destiné à refroidir les radiateurs aux rayons infrarouges (35), dans lequel la quantité et / ou le sens de courant du courant de fluide de refroidissement de surface (52) est régulé(e) et/ou commandé(e) par le biais d'au moins un dispositif de réglage (75, 80) ajustable mécaniquement, **caractérisé par le fait que** le module de chauffage (30) comprend un bouclier de refroidissement (61) pour le refroidissement des radiateurs, dans lequel le rayonnement thermique (38) des radiateurs aux rayons infrarouges (35), qui est dirigé vers le haut, est réfléchi sur le bouclier de refroidissement (61) hautement réfléchissant dans la ruelle de chauffage (31), la face inférieure (62) étant une surface à propriétés hautement réfléchissantes, une surface en métal léger polie miroir ou une surface sur laquelle est appliquée une couche hautement réfléchissante.

10. Procédé selon la revendication 9, dans lequel le courant de fluide de refroidissement de surface (52) est divisé en un courant partiel de fluide de refroidissement de surface (52a) et en un courant de fluide de refroidissement de radiateur (54).

11. Procédé selon la revendication 10, dans lequel la division du courant de fluide de refroidissement de surface (52) se fait par le biais d'au moins un volet de guidage d'air (75).

12. Procédé selon la revendication 9, dans lequel l'amenée du courant de fluide de refroidissement de surface (52) se fait par des fentes à air (80) qui sont disposées du côté de la ruelle de chauffage (31) opposé au côté comprenant les radiateurs aux rayons infrarouges (35), de telle manière que respectivement un radiateur aux rayons infrarouges (35) est situé en regard d'une fente à air (80).

13. Procédé selon la revendication 12, dans lequel la section transversale et / ou la longueur des fentes à air (80) et / ou la distance séparant les fentes à air (80) les unes des autres peu(ven)t être réglée(s).

14. Procédé selon l'une quelconque des revendications 12 et 13, dans lequel chacune des fentes à air (80) peut être réglée et / ou fermée individuellement.
